# EUROPEAN PATENT APPLICATION

(11) **EP 2 058 732 A2**
(43) Date of publication of application: **13.05.2009**
(21) Application number: 08018239.7
(22) Date of filing: 17.10.2008
(51) Int. Cl.: G06F 3/14

(54) **Image processing method and system**

(30) Priority: 29.10.2007 TW 96140570
(71) Applicant: Coretronic Corporation, Hsinchu Hsin chu (TW)
(72) Inventor: Young, Jenn-Shoou, Hsinchu (TW); Huang, Sheng-Yuan, Hsinchu (TW)
(74) Representative: TER MEER - STEINMEISTER & PARTNER GbR

(57) **Abstract**

An image processing method is disclosed. The method is applied to a display device including a plurality of series connection sub display devices. A video chip of each of the sub display devices sets a device ID for each of the corresponding sub display devices according to a setting signal. An image frame is retrieved from an image output device and is divided to a plurality of sub image frames according to the device IDs of each of the sub display devices. It is determined whether a switch signal has been detected. If the switch signal has not been detected, the sub image frames are respectively displayed in the sub display devices with a first video mode. If the switch signal has been detected, the sub image frames are respectively displayed in the sub display devices with a second video mode.

## Description

### CROSS REFERENCE TO RELATED APPLICATIONS

This Application claims priority of Taiwan Patent Application No. 096140570, filed on Oct. 29, 2007, the entirety of which is incorporated by reference herein.

### BACKGROUND OF THE INVENTION

### Field of the Invention

The invention relates to an image processing method, and more particularly to an image processing method capable of switching video modes.

### Description of the Related Art

Currently, most commercial billboards include multiple televisions (TVs) or liquid crystal display devices (LCDs), resulting in a large-scale display device (a video wall, for example) and image frames are output to the large-scale display device using an image output device (a computer, a digital video disc (DVD) player, and the like, for example). A front bezel however, located around the display devices may cover a portion of the image frames.

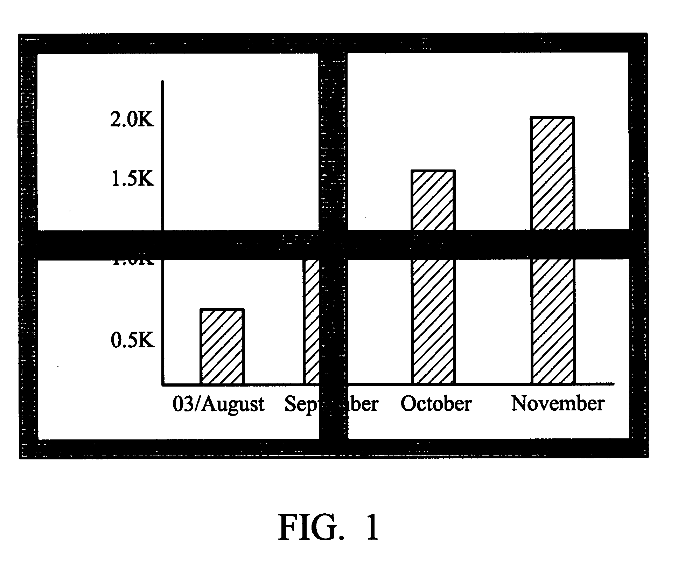

As shown in Fig. 1, a video wall consists of four (2*2) display devices, in which black bars around the display devices represent front bezels. Since video mode switching is not provided, a portion of the image frames is covered by the front bezels, for example, a portion of "September" and "1.0K" in the image frames are covered by the front bezels. When the covered content is a significant portion of the image being presented, accurate information provided by the image may be lost or misconstrued. Additionally, if the front bezels are wider, a greater portion of the image may be covered.

Thus, an image processing method and system capable of improving the image covering by front bezels of display devices are desirable.

### BRIEF SUMMARY OF THE INVENTION

Image processing methods are provided. An exemplary embodiment of the image processing method is applied to a display device including a plurality of series-connection sub display devices, wherein each series-connection sub display device includes a video chip, and a front bezel located around the sub display devices. The video chip of each sub display device sets a device ID for each sub display device according to a setting signal. An image frame is retrieved from an image output device and is divided to a plurality of sub image frames according to the device IDs of each sub display device. Next, it is determined whether a switch signal has been detected. If the switch signal has not been detected, the sub image frames are respectively displayed in the sub display devices with a first video mode. If the switch signal has been detected, the sub image frames are respectively displayed in the sub display devices with a second video mode.

An image processing system is provided in the embodiment of the invention. An exemplary embodiment of an image processing system includes an image output device and a display device. The image output device provides an image frame. The display device includes a plural of series-connection sub display devices, wherein each series-connection sub display device includes a video chip, and a front bezel located around the sub display devices. The video chips set a device ID for each of the corresponding sub display devices according to a setting signal. The video chip retrieves and divides an image frame to a plurality of sub image frames according to the device IDs of the each of the sub display devices, and determines whether a switch signal has been detected. If the switch signal has not been detected, the sub image frames are respectively displayed in the sub display devices with a first video mode, and, if the switch signal has been detected, the sub image frames are respectively displayed in the sub display devices with a second video mode.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The invention can be more fully understood by reading the subsequent detailed description and examples with references made to the accompanying drawings, wherein:

Fig. 1 is a schematic view of a conventional video wall broadcasting image frames;

Fig. 2 is a schematic view of sub display devices switching between different video modes in an embodiment of the present invention;

Figs. 3A-3D are schematic views of an on screen display (OSD) of a sub display device in an embodiment of the present invention;

Fig. 4 is a flowchart of an image processing method in an embodiment of the present invention;

Fig. 5 is a schematic view of an image processing system in an embodiment of the present invention;

Fig. 6 is a schematic view of sub display devices displaying sub image frames using a split mode in an embodiment of the present invention; and

Fig. 7 is a schematic view of sub display devices displaying sub image frames using a blank mode in an embodiment of the present invention.

### DETAILED DESCRIPTION OF THE INVENTION

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

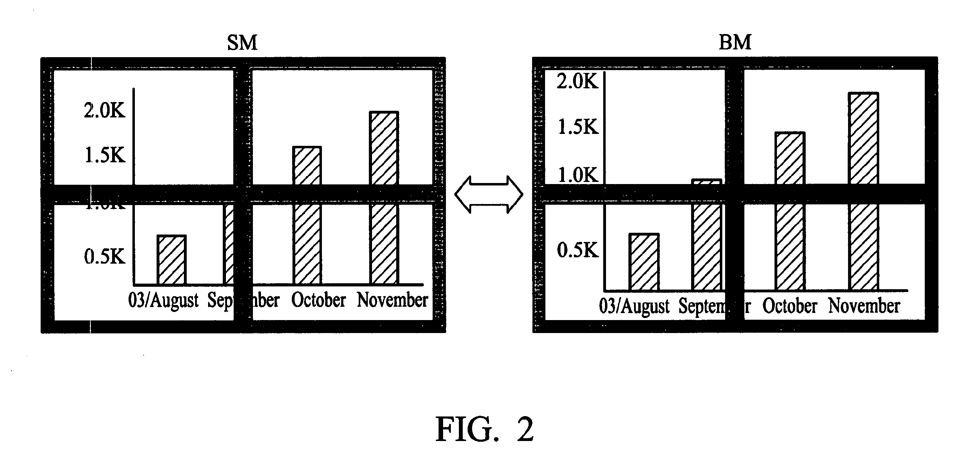

Several exemplary embodiments of the invention are described with reference to Figs. 2 through 7, which generally relate to image processing. It is to be understood that the following disclosure provides various different embodiments as examples for implementing different features of the invention. Specific examples of components and arrangements are described in the following to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various described embodiments and/or configurations.

Since portions of an image frame may be covered by the front bezel of a video wall formed by the series-connection sub display devices, an embodiment of the invention discloses an image processing method and system capable of switching video modes by users, providing at least two video modes for switching.

Fig. 2 is a schematic view of sub display devices switching between different video modes in an embodiment of the present invention. A display device (a video wall, for example) includes a plurality of series-connection sub display devices (TVs or LCDs, for example), wherein each series-connection sub display device includes a video chip (not shown), and a front bezel located around the sub display devices. As shown in Fig. 2, a video wall includes four (2*2) series-connection TVs (or LCDs).

An embodiment of the present invention provides a split mode (SM) and a blank mode (BM) for each of the sub display devices.

Under the split mode, an image frame is averagely divided to four sub image frames, and the sub image frames are respectively displayed in four sub display devices. Additionally, portions of the sub image frames are covered by the front bezels of the sub display devices, for example, portions of "September" and "1.0K" in the sub image frames are covered by the front bezels.

Under the blank mode, the sizes of the four sub image frames are set to fit within the visual scope of each sub display device, wherein the last pixel of a sub image frame of a previous sub display device neighbors to the first pixel of a sub image frame of a neighboring sub display device. In this embodiment, with respect to horizontal pixels, a 1024x768 image frame may be divided into four (2*2), 512x384 sub image frames respectively displayed in four sub display devices, wherein the left-top, right-top, right-bottom, and left-bottom of the sub image frames are the 1^{st}, 2^{nd}, 3^{rd}, and 4^{th} sub image frames, respectively. The 512^{th} pixel of the 1^{st} sub image frame is displayed and located at the furthest right boundary of the left-top sub display device while the 1^{st} pixel of the 2^{nd} sub image frame is displayed and located at the furthest left boundary of the right-top sub display device. Thus, under the blank mode, the four (2*2) sub display devices show the four (2*2), 512x384 sub image frames. The Video chip (not shown) of each sub display device adjusts display ratios of corresponding sub image frames to fit within a visual scope of a corresponding sub display device, respectively.

It is noted that display ratios of the sub image frames may be changed. As shown in Fig. 2, for example, portions of "September" and "1.0K" in the sub image frames are covered by the front bezels under the split mode but are completely displayed under the blank mode. An embodiment of the invention provides a switching function between the two video modes so that different image content types may be interchangeably displayed. For example, if display of animation or statistical trend charts is desired, the method allows for switching to a split mode, which may be appropriate for the related contents. However, if display of detailed contents relating to X and Y axes of statistical charts is desired, the method also allows for switching to what may be an appropriate blank mode.

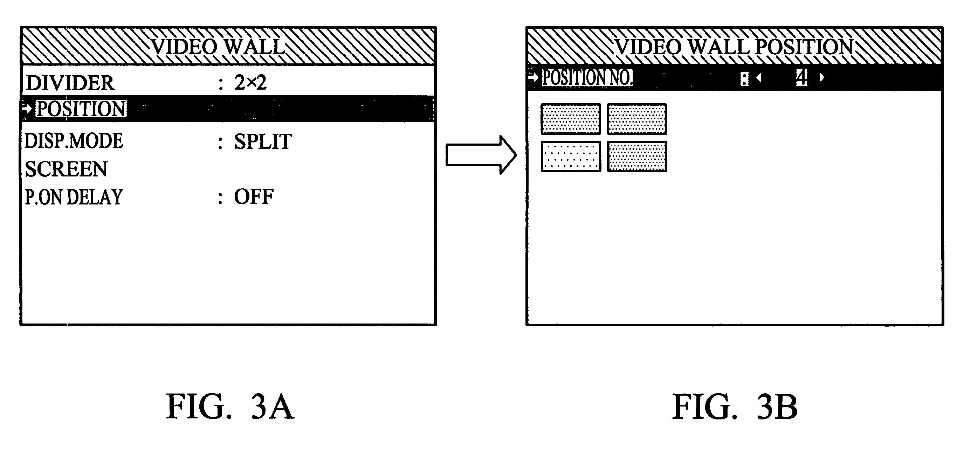

To achieve switching between the split and blank modes in the sub display devices, a video wall selection is added to an on screen display (OSD) of a display device. The video wall selection provides a display device amount item (DIVIDER), a position item (POSITION), and a display mode item (DISP. MODE). Thus, the video mode may be switched by user's operation, as shown in Figs. 3A-3D.

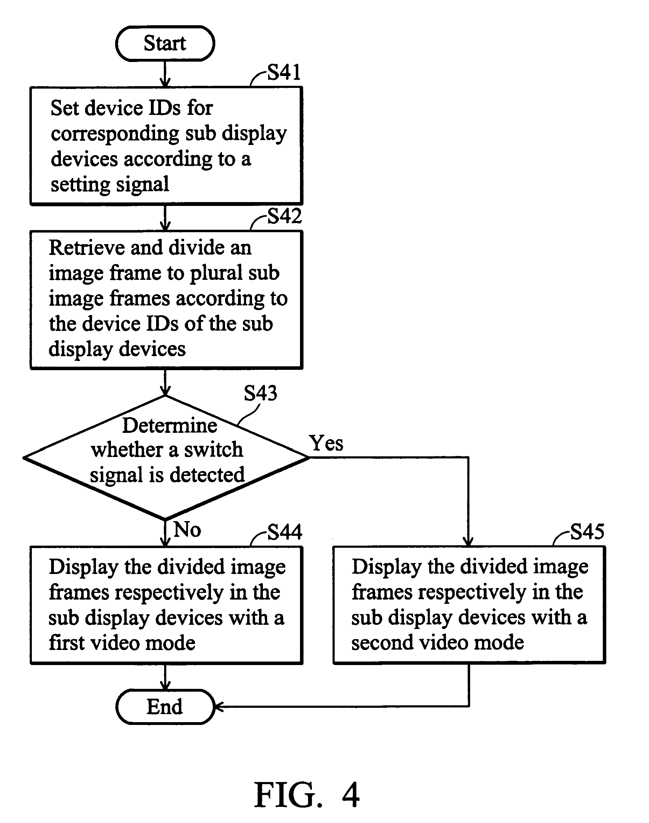

Fig. 4 is a flowchart of an image processing method in an embodiment of the present invention.

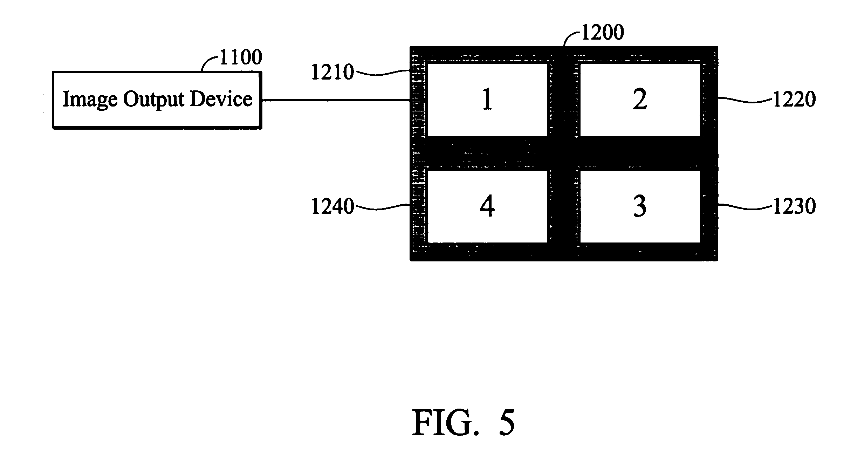

First, device IDs for corresponding sub display devices are set according to a setting signal (step S41). Referring to Fig. 3A, the DIVIDER item of the OSD is used to define the video wall as a display device including an n*m matrix of sub display devices, where n>1 and m>1. The device IDs of each of the sub display devices are set by 1∼n*m using the POSITION item, as shown in Fig. 3B. With respect to a display device including a 2*2 matrix of sub display devices, for example, the device IDs of the four sub display devices are respectively set as 1, 2, 3, and 4, and are arranged as shown in Fig. 5, in which the black portion represents the front bezel around the sub display devices and the scopes in which the numbers are located represents visual scopes displaying sub image frames. The video chips (not shown) of the four sub display devices respectively set device IDs of the four sub display devices according to the setting signal provided by a user.

As described, the video wall includes the n*m matrix sub display devices so that the device IDs are set by 1∼n*m. Additionally, each sub display device is series-connected via video graphics arrays (VGA), digital video interactive (DVI), or high definition multimedia interface (HDMI) adapters. Referring to Fig. 5, for example, an embodiment of the image processing system at least includes an image output device 1100 and a display device 1200. The display device 1200 includes four sub display devices 1210∼1240 which are series-connected, with each other and are composed of the display device 1200, wherein each sub display device respectively includes a video chip (not shown). The series-connection is described as follows. The image output device 1100 connects to the sub display device 1210, the sub display device 1210 connects to the sub display device 1220, the sub display device 1220 connects to the sub display device 1230, and the sub display device 1230 connects to the sub display device 1240. In this embodiment, the display device includes, but is not limited to, four (2*2, where n=2 and m=2) sub display devices.

When an image output device (a computer or a DVD player, for example) retrieves an image frame, the image frame is divided into a plurality of sub image frames according to the device IDs of the sub display devices 1210∼1240 (step S42). The device IDs of the sub display devices 1210∼1240, for example, are 1, 2, 3, and 4 and the retrieved image frame is a 1024x768 image frame, so that the image frame is divided into four (2*2), 512x384 sub image frames.

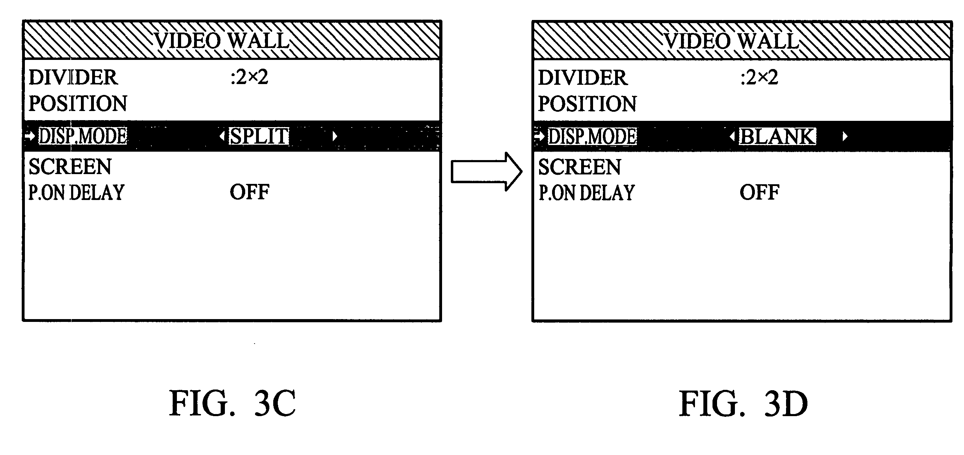

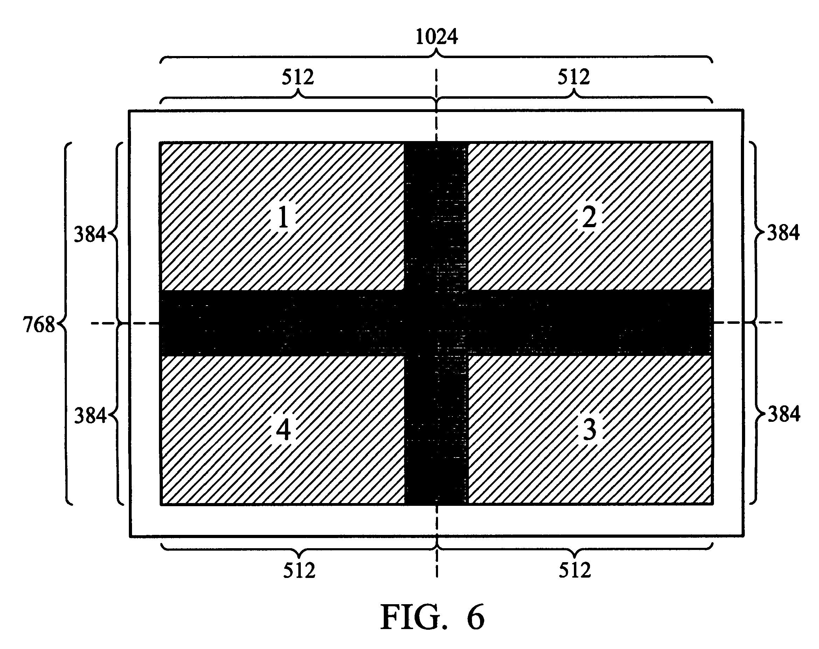

Next, it is determined whether a switch signal has been detected (step S43). A video mode of each of the sub display devices may be set as a split mode or a blank mode using the DISP. MODE item of the OSD, as shown in Figs. 3C and 3D. If the switch signal has not been detected, the divided image frames are respectively displayed in the sub display devices 1210-1240 with a first video mode (a preset display mode) (step S44). In this embodiment, each of the sub display devices displays their sub image frames by the preset split mode, as shown in Fig. 3C. Thus, the four, 512x384 sub image frames are sequentially displayed in the sub display devices 1210∼1240 by the order of the device IDs 1, 2, 3, and 4 and the video chips (not shown) of each of the sub display devices 1210∼1240 adjust display ratios of corresponding sub image frames, such that a portion of each sub image frame is covered by the front bezels, as shown in Fig. 6.

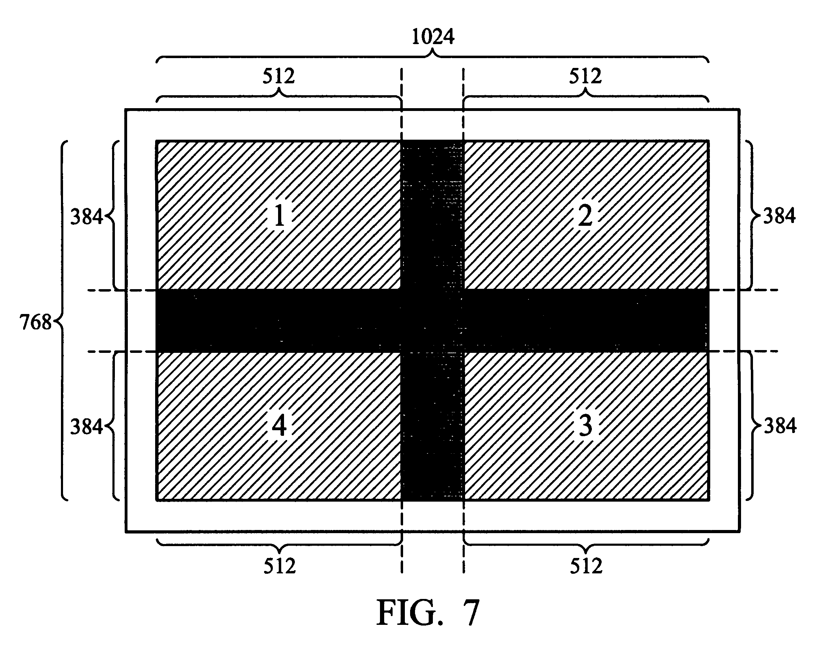

If the switch signal has been detected, the sub image frames are respectively displayed in the sub display devices with a second video mode (the blank mode, for example) (step S45). When the sub display devices display the sub image frames with the blank mode, the four, 512x384 sub image frames are sequentially displayed in the sub display devices 1210, 1220, 1230, and 1240, and the last pixel of a sub image frame of a previous sub display device neighbors to the first pixel of a sub image frame of a neighboring sub display device. With respect to horizontal pixels, for example, the 512^{th} pixel of the 1^{st} sub image frame is displayed and located at the furthest right boundary of the left-top sub display device while the 1^{st} pixel of the 2^{nd} sub image frame is displayed and located at the furthest left boundary of the right-top sub display device. Under this mode, each video chip (not shown) of the sub display devices adjusts display ratios of corresponding sub image frames to fit within a visual scope of a corresponding sub display device, respectively, as shown in Fig. 7.

Referring to Fig. 5, video chips (not shown) of the sub display devices 1210∼1240, set device IDs thereof according to the received setting signal. The video chips (not shown) of the sub display devices 1210∼1240, utilize the DIVIDER item of the OSD to define the sub display devices 1210∼1240 as an n*m matrix of sub display devices, where n>1 and m>1, and set the device IDs of each of the sub display devices by 1∼n*m using the POSITION item of the OSD, as shown in Fig. 3B. With respect to a display device including a 2*2 matrix of the sub display devices, for example, the device IDs of the sub display devices 1210∼1240 are respectively set as 1, 2, 3, and 4 according to a setting signal.

The image output device 1100 outputs an image frame to the sub display device 1210 and the video chips (not shown) of the sub display devices 1210∼1240 divides the image frame to a plurality of sub image frames according to the device IDs of the sub display devices 1210-1240. For example, the video chips of the sub display devices 1210∼1240 retrieve and divide a 1024x768 image frame to four (2*2), 512x768 sub image frames.

The video chips (not shown) determine whether a switch signal has been detected according to the DISP. MODE item of the OSD. If a switch signal has not been detected, the video chips (not shown) of the sub display devices 1210-1240 retrieve their corresponding sub image frames according to their respective device IDs and display each of the sub image frames by the first display mode (the preset display mode). In this embodiment, each of the sub display devices displays a corresponding sub image frame with a default display mode, such as the split mode, as shown in Fig. 3C. Thus, the four, 512x384 sub image frames are sequentially displayed in the sub display devices 1210∼1240 by the order of the device IDs 1, 2, 3, and 4 and the video chips (not shown) of each of the sub display devices 1210∼1240 adjust display ratios of corresponding sub image frames, such that a portion of each sub image frame is covered by the front bezels, as shown in Fig. 6.

If the switch signal has been detected, the video chips (not shown) of each of the sub display devices 1210∼1240 retrieve their corresponding sub image frames according to their respective device IDs and display each of the sub image frames by the second video mode (the blank mode), as shown in Fig. 3D. When the sub image frames are displayed with the blank mode, the four 512x384 sub image frames are sequentially displayed in the sub display devices 1210∼1240, and the last pixel of a sub image frame of a previous sub display device neighbors to the first pixel of a sub image frame of a neighboring sub display device. With respect to horizontal pixels, for example, the 512^{th} pixel of the sub image frame which has been assigned the device ID equal to 1 is displayed and located at the furthest right boundary of the left-top sub display device 1210 while the 1^{st} pixel of the sub image frame which has been assigned the device ID equal to 2 is displayed and located at the furthest left boundary of the right-top sub display device 1220 and so forth. Under this mode, each video chip (not shown) of the sub display devices 1210-1240 adjusts display ratios of corresponding sub image frames to fit within a visual scope of a corresponding sub display device, respectively, as shown in Fig. 7.

A record media (such as a compact disc (CD), a floppy disc, a removable hard disc and so forth) is further provided in an embodiment of the invention. The record media records authority-signed programs capable of reading by a computer so as to perform the above-mentioned image processing method. The authority-signed programs stored in the record media are composed of a plurality program code snatch, such as a program code snatch of establishing organization plot, a program code snatch of signing file, a setting program code snatch and a deployment program code snatch. Furthermore, the functions of the program code snatches correspond to the steps of the above-mentioned method and the system function block diagram.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. An image processing method applied to a display device comprising a plurality of series-connection sub display devices and a front bezel located around the sub display devices, wherein each of the series-connection sub display devices comprises a video chip, comprises:
- setting a device ID for each of the sub display devices according to a setting signal by the video chips;
- retrieving an image frame from an image output device, and dividing the image frame to a plurality of sub image frames according to the device IDs of the each of the sub display devices; and
- determining whether a switch signal has been detected, wherein:
- if the switch signal has not been detected, respectively displaying the sub image frames in the sub display devices with a first video mode; and
- if the switch signal has been detected, respectively displaying the sub image frames in the sub display devices with a second video mode.

2. The image processing method as claimed in claim 1, further comprising setting the sub display devices as an n* m matrix, where n > 1 and m > 1, before setting the device IDs for each of the sub display devices.

3. The image processing method as claimed in claim 2, wherein the step of setting the device IDs for each of the sub display devices further comprises setting the device IDs for each of the sub display devices as 1∼ n* m.

4. The image processing method as claimed in claim 2, wherein the step of dividing the image frame to the plurality of sub image frames further comprises dividing the image frame to n* m sub image frames by the video chips.

5. The image processing method as claimed in claim 4, wherein the first video mode is a split mode, and each of the video chips adjusts a display ratio of a corresponding sub image frame, and a portion of each sub image frames is covered by the front bezel.

6. The image processing method as claimed in claim 5, wherein the second video mode is a blank mode, and each of the video chips adjusts a display ratio of a corresponding sub image frame so that each of the sub image frames fits within a visual scope of the corresponding sub display device.

7. An image processing system, comprising:
- an image output device providing an image frame; and
- a display device comprising a plurality of series-connection sub display devices, wherein each of the series-connection sub display devices comprises a video chip, and a front bezel located around the sub display devices,
- wherein the video chips set a device ID for each of the corresponding sub display devices according to a setting signal, retrieve and divide an image frame to a plurality of sub image frames according to the device IDs of the each of the sub display devices, determine whether a switch signal has been detected, and if the switch signal has not been detected by the video chips, respectively display the sub image frames in the sub display devices with a first video mode, and, if the switch signal has been detected, respectively display the sub image frames in the sub display devices with a second video mode.

8. The image processing system as claimed in claim 7, wherein the sub display devices correspond to an n* m matrix, where n > 1 and m > 1.

9. The image processing system as claimed in claim 8, wherein the device IDs of each of the sub display devices are set as 1∼ n* m.

10. The image processing system as claimed in claim 8, wherein the image frame is divided into n* m sub image frames.

11. The image processing system as claimed in claim 10, wherein the first video mode is a split mode, and each of the video chips adjusts a display ratio of a corresponding sub image frame, and a portion of each of the sub image frames is covered by the front bezel.

12. The image processing system as claimed in claim 7, wherein the second video mode is a blank mode, and each of the sub image frames fits within a visual scope of the corresponding sub display device.

13. A computer-readable storage medium storing a computer program, the computer program comprising a plurality of program codes to be loaded in a computer system to perform an image processing method applied to a display device, the display device comprising a plurality of series-connection sub display devices and a front bezel located around the series-connection sub display devices, wherein each of the series-connection sub display devices comprises a video chip, the image processing method comprising:
- setting a device ID for each of the series-connection sub display devices according to a setting signal by the video chips;
- retrieving an image frame from an image output device, and dividing the image frame to a plurality of sub image frames according to the device IDs of the sub display devices; and
- determining whether a switch signal has been detected, wherein:
- if the switch signal has not been detected, respectively displaying the sub image frames in the sub display devices with a first video mode; and
- if the switch signal has been detected, respectively displaying the sub image frames in the sub display devices with a second video mode.

14. The computer-readable storage medium as claimed in claim 13, further comprising setting the sub display devices as an n* m matrix, where n > 1 and m > 1, before setting the device IDs for the sub display devices.

15. The computer-readable storage medium as claimed in claim 14, wherein the step of setting the device IDs for the sub display devices further comprises setting the device IDs for each of the sub display devices as 1- n* m.

16. The computer-readable storage medium as claimed in claim 14, wherein the step of dividing the image frame to the plurality of sub image frames further comprises dividing the image frame to n* m sub image frames.

17. The computer-readable storage medium as claimed in claim 16, wherein the first video mode is a split mode, and each of the video chips adjusts a display ratio of a corresponding sub image frame, and a portion of each of the sub image frames is covered by the front bezel.

18. The computer-readable storage medium as claimed in claim 13, wherein the second video mode is a blank mode, and each of the video chips adjusts a display ratio of the corresponding sub image frame so that each of the sub image frames fits within a visual scope of the corresponding sub display device.
